# DEMANDE DE BREVET EUROPEEN

(11) **EP 2 781 446 A1**
(43) Date de publication de la demande: **24.09.2014**
(21) Numéro de dépôt: 14160678.0
(22) Date de dépôt: 19.03.2014
(51) Int. Cl.: B62M 6/40, B62M 6/90, B62H 5/00

(54) **Système automatique de stockage de cycles et batterie pour un tel système.**

(30) Priorité: 21.03.2013 FR 1352536
(71) Demandeur: JCDecaux SA, 92200 Neuilly-Sur-Seine (FR)
(72) Inventeur: Tavernier, Patrick, 78000 VERSAILLES (FR); Hoden, Cyril, 78950 GAMBAIS (FR)
(74) Mandataire: Cabinet Plasseraud

(57) **Abrégé**

Système automatique de stockage permettant de verrouiller des cycles électriques (1) sur des postes de verrouillage (7), les cycles fonctionnant sur des batteries amovibles (9) qui comportent chacune un dispositif de commutation (22) commandé par une unité logique (9c) pour basculer entre un état de connexion et un état de déconnexion adaptés pour respectivement permettre ou interdire à la batterie de décharger de l'énergie électrique.

## Description

### DOMAINE DE L'INVENTION

La présente invention est relative aux systèmes automatiques de stockage de cycles et aux batteries pour de tels systèmes.

Plus particulièrement, l'invention concerne un système automatique de stockage de cycles comprenant :
- une pluralité de cycles électriques comportant chacun un moteur électrique et fonctionnant respectivement avec des batteries électriques rechargeables,
- une infrastructure fixe comportant une pluralité de postes de verrouillage sur lesquels peuvent se verrouiller lesdits cycles électriques et au moins un dispositif de commande externe adapté pour sélectivement autoriser le verrouillage et le déverrouillage des cycles électriques sur lesdits postes de verrouillage.

Un système de stockage de cycles tel que décrit ci-dessus peut être utilisé par exemple pour mettre des cycles en libre service à disposition du public, moyennant identification de l'emprunteur du cycle et éventuellement paiement d'une location.

### ARRIERE PLAN DE L'INVENTION

Le document EP-A-1 820 722 décrit un exemple d'un tel système de stockage de cycles en vue de leur location, dans lequel la batterie de chaque cycle est fixée à demeure au cycle et se recharge pendant que le cycle est verrouillé sur la structure d'accueil, ce qui présente l'inconvénient que ladite batterie n'est pas forcément bien rechargée lorsque l'utilisateur suivant emprunte le cycle.

### OBJETS DE L'INVENTION

La présente invention a notamment pour but de pallier cet inconvénient.

A cet effet, selon l'invention, un système automatique de stockage de cycles du genre en question est caractérisé en ce que les batteries sont amovibles et indépendantes des cycles électriques, chaque batterie comportant un connecteur électrique externe,
en ce que chaque cycle électrique comporte un connecteur électrique de cycle accessible à un utilisateur pour connecter le connecteur électrique externe d'une desdites batteries sur le cycle et alimenter le cycle électrique,
et en ce que la batterie comporte un dispositif de commutation pouvant sélectivement basculer entre un état de connexion et un état de déconnexion adaptés pour respectivement permettre et interdire au connecteur électrique externe de ladite batterie de décharger de l'énergie électrique, et une unité logique commandant le dispositif de commutation de la batterie en fonction d'informations de commande de batterie reçues par ladite unité logique de la batterie.

Grâce à ces dispositions, chaque utilisateur peut utiliser sa propre batterie ou en tout cas une batterie dont il maîtrise la charge, ce qui lui permet d'utiliser un cycle avec une batterie bien chargée. De plus, on évite également, de cette façon, que la batterie ne reste au froid en hiver, ce qui permet d'allonger considérablement la durée de vie de ladite batterie. De plus, la commande du dispositif de commutation en fonction d'informations reçues de l'infrastructure fixe, permet d'apporter des fonctionnalités supplémentaires, par exemple une protection supplémentaire contre le vol et/ou une protection de la batterie contre les déchargements intempestifs, ce qui est particulièrement utile dans le cas des batteries amovibles.

Dans différents modes de réalisation du système automatique de stockage de cycles selon l'invention, on peut éventuellement avoir recours en outre à l'une et/ou à l'autre des dispositions suivantes (utilisables éventuellement indépendamment les unes des autres et indépendamment des dispositions précitées) :
- la batterie comporte un accumulateur électrique et le dispositif de commutation de la batterie est adapté pour sélectivement relier ledit accumulateur au connecteur électrique externe de ladite batterie ;
- l'unité logique de la batterie est adaptée pour détecter si le connecteur électrique externe de la batterie est connecté au connecteur de cycle, et pour commander le dispositif de commutation de la batterie de façon à le faire basculer en état de déconnexion lorsque le connecteur électrique externe de batterie est déconnecté du connecteur de cycle ;
- l'unité logique de la batterie est adaptée pour commander le dispositif de commutation de la batterie de façon le faire basculer en état de connexion lorsque le connecteur électrique externe de la batterie est connecté au connecteur de cycle ;
- l'unité logique de la batterie communique avec une unité centrale électronique appartenant au cycle et les informations de commande de batterie comprennent des données de commande de batterie échangées entre l'unité logique de la batterie et l'unité centrale électronique du cycle ;
- l'unité logique de la batterie communique avec l'infrastructure fixe et est adaptée pour placer le dispositif de commutation en état de déconnexion lorsqu'elle reçoit des informations de blocage de batterie en provenance de ladite infrastructure fixe ;
- l'unité logique de la batterie communique avec l'unité centrale électronique du cycle, laquelle communique avec l'infrastructure fixe ;
- la batterie possède un identifiant et le système comporte des moyens pour transmettre cet identifiant à l'infrastructure fixe, ladite infrastructure fixe est adaptée pour communiquer avec l'unité logique de la batterie pour lui transmettre un ordre de blocage (notamment si l'identifiant de la batterie appartient à une batterie interdite d'utilisation, et ladite unité logique de la batterie est adaptée pour maintenir durablement le dispositif de commutation à l'état de déconnexion lorsqu'elle a reçu ledit ordre de blocage ;
- la batterie possède un identifiant et le système comporte des moyens pour transmettre cet identifiant à l'infrastructure fixe lorsque la batterie est connectée à un cycle électrique verrouillé sur un poste de verrouillage, et ladite infrastructure fixe est adaptée pour sélectivement déverrouiller ou non le cycle en fonction dudit identifiant ;
- l'identifiant de la batterie est lisible par une unité centrale électronique appartenant au cycle électrique, laquelle communique avec l'unité logique de la batterie et avec l'infrastructure fixe ;
- le système comporte également des chargeurs électriques adaptés pour charger les batteries, chaque chargeur comportant une unité centrale électronique adaptée pour communiquer avec l'unité logique d'une batterie connectée audit chargeur, l'unité logique de la batterie étant adaptée pour commander le dispositif de commutation en fonction d'informations de commande de batterie échangées entre ladite unité centrale du chargeur et ladite unité logique de la batterie, et le dispositif de commutation étant adapté pour empêcher aussi bien la recharge que la décharge de la batterie par le connecteur externe de ladite batterie lorsqu'il est à l'état déconnecté : on peut empêcher ainsi la recharge de batteries volées, si le voleur n'a pas pu voler un chargeur compatible avec cette batterie ;
- la batterie possède un identifiant lisible par l'unité centrale électronique du chargeur, lequel a en mémoire des données d'identification correspondant à cet identifiant, et l'unité centrale du chargeur est adaptée pour envoyer à l'unité logique de la batterie des informations de commande de batterie permettant de faire basculer le dispositif de commutation à l'état de connexion, lorsque l'identifiant lu par l'unité centrale du chargeur correspond auxdites informations d'identification.

Par ailleurs, l'invention a également pour objet une batterie amovible utilisable dans un système tel que décrit ci-dessus, comportant :
- un connecteur électrique externe,
- un dispositif de commutation pouvant sélectivement basculer entre un état de connexion et un état de déconnexion adaptés pour respectivement permettre ou interdire au connecteur électrique externe de ladite batterie de décharger de l'énergie électrique,
- et une unité logique communiquant avec l'infrastructure fixe et commandant le dispositif de commutation de la batterie en fonction d'informations de commande de batterie reçues par ladite unité logique de la batterie.

### BREVE DESCRIPTION DES DESSINS

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique en perspective montrant un système automatique de stockage de cycles selon une forme de réalisation de l'invention,
- la figure 2 est un schéma bloc illustrant les composants électriques principaux du système de stockage de cycles de la figure 1,
- la figure 3 est une vue schématique en perspective d'une des batteries utilisables dans le système des figures 1 et 2, avec son chargeur,
- et la figure 4 est une vue schématique en perspective illustrant la batterie connectée au chargeur.

### DESCRIPTION PLUS DETAILLEE

Sur les différentes figures, les mêmes références désignent des éléments identiques ou similaires.

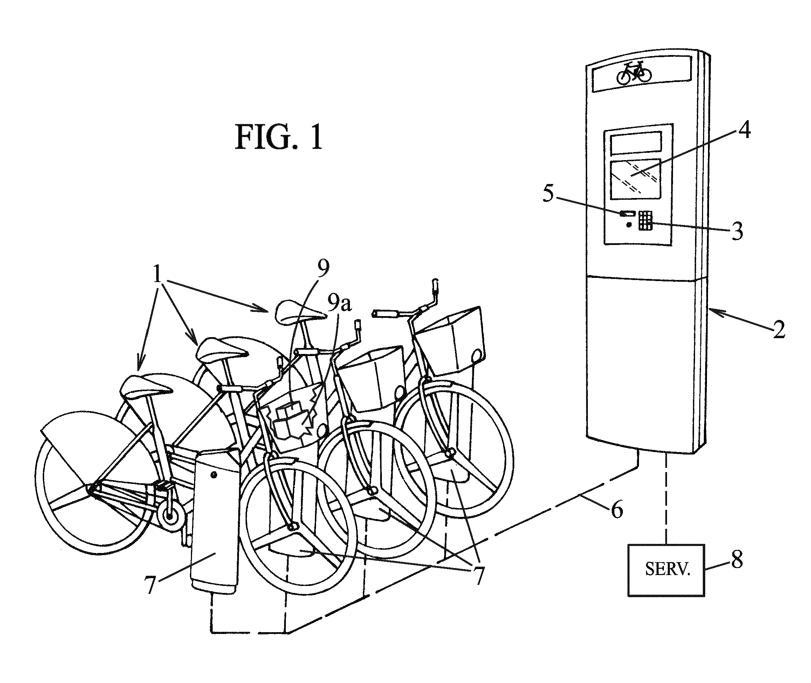

Comme représenté sur la figure 1, la présente invention concerne un système automatique de stockage de cycles 1 tels que notamment des bicyclettes, permettant par exemple de stocker des cycles sur la voie publique de façon à les mettre à la disposition du public, notamment par location.

Ce système automatique de stockage de cycles peut comporter plusieurs stations de stockage de cycles, dont une est représentée sur la figure 1. Ces stations de stockage de cycles peuvent par exemple être réparties en différents endroits d'une même ville. Chaque station de stockage de cycles comprend un poste central de station 2, qui se présente ici sous la forme d'une borne interactive dotée d'une interface utilisateur comprenant par exemple un clavier 3, un écran 4, éventuellement un lecteur de cartes portatives électroniques 5, un dispositif d'impression de tickets, etc. En variante, la borne interactive 2 pourrait ne pas comporter d'interface utilisateur et être une simple passerelle de communication entre la station de stockage de cycles et un serveur central 8 (SERV.).

La borne interactive 2 communique d'une part, avec le serveur central 8 qui gère les abonnements et les locations de cycles, et d'autre part, avec une pluralité de postes de verrouillage 7 qui permettent de verrouiller les cycles pendant leur stockage et qui peuvent par exemple se présenter sous la forme de bornes de verrouillage fixées au sol sur la voie publique et adaptées pour verrouiller chacune un cycle 1.

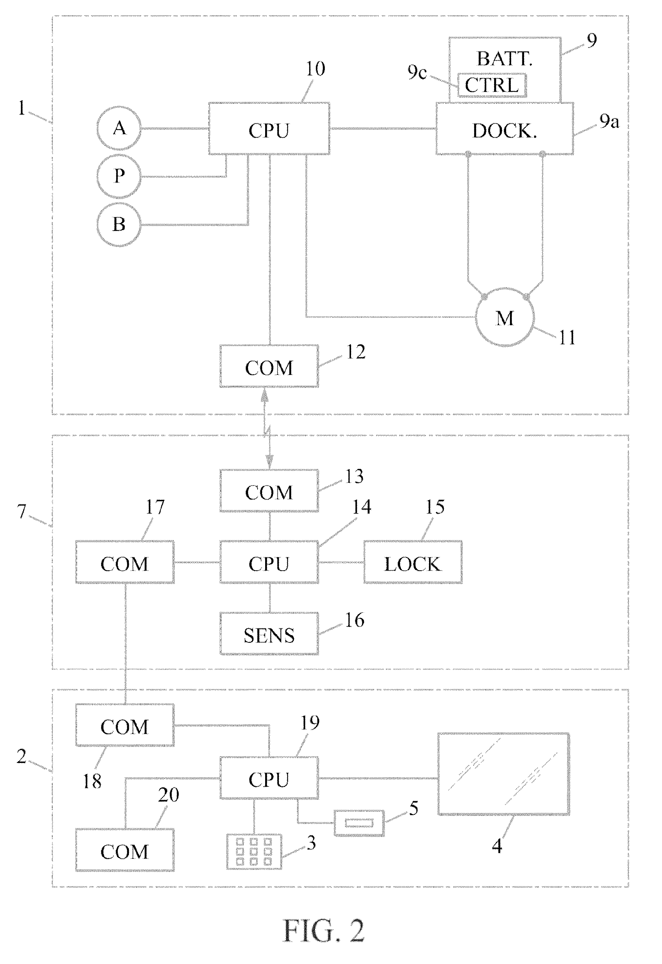

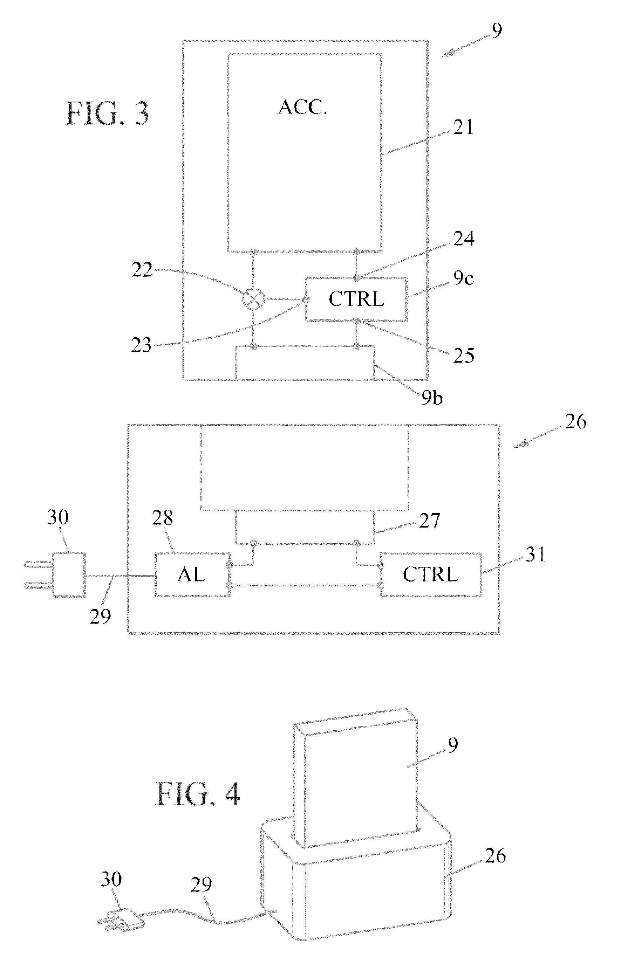

Le cycle 1 comporte classiquement un châssis composé d'un cadre porté par la roue arrière et d'une fourche surmontée du guidon et montée sur la roue avant. Comme représenté sur la figure 2, chaque cycle 1 peut être un cycle à assistance électrique comportant un connecteur 9a (DOCK.) sur lequel peut se connecter une batterie électrique 9 (BATT.) amovible et rechargeable qui comporte un connecteur électrique externe 9b (figure 3) complémentaire dudit connecteur 9a. Une telle batterie est rechargeable par l'utilisateur, généralement chez lui, à la différence des batteries montées à demeure sur le cycle, qui se rechargent sur le cycle pendant qu'il est en position de stockage.

Le connecteur 9a est relié notamment à une unité centrale électronique 10 du cycle (CPU), par exemple un contrôleur, microprocesseur ou similaire. La batterie 9 peut éventuellement comporter une unité logique 9c (CTRL) telle qu'un microcontrôleur ou microprocesseur, qui peut éventuellement avoir en mémoire un identifiant unique lisible par l'unité centrale 10 par le biais du connecteur 9a ou autrement, et l'unité centrale 10 possède également une mémoire (ou peut accéder à une mémoire) dans laquelle elle peut stocker cet identifiant unique. Eventuellement, l'identifiant unique de la batterie, s'il est prévu, pourrait être mémorisé dans un circuit d'identification spécifique lisible par l'unité centrale 10, ou autre.

La batterie comporte en outre :
- un accumulateur électrique 21 relié au connecteur externe 9b par une liaison électrique,
- et un dispositif de commutation électronique 22 disposé sur cette liaison électrique et commandé par l'unité logique 9c en fonction d'informations de commande de batterie reçues par ladite unité logique de la batterie, pour sélectivement basculer entre un état de connexion et un état de déconnexion adaptés pour respectivement permettre et interdire au connecteur électrique externe 9b de ladite batterie de décharger de l'énergie électrique.
   Avantageusement, le dispositif de commutation électronique coupe la liaison électrique entre l'accumulateur 21 et le connecteur externe 9b dans l'état de déconnexion, de sorte qu'il interdit alors non seulement la décharge de la batterie, mais également sa recharge.

L'unité logique 9c peut comporter par exemple :
- une sortie 23 vers le dispositif de commutation 22,
- au moins une entrée 24 reliée à l'accumulateur 21 pour recevoir par exemple une information de tension ou de charge de cet accumulateur, que ladite unité logique 9c peut mémoriser dans une mémoire interne ou externe (non représentée),
- au moins une entrée/sortie 25 reliée au connecteur 9b et permettant à l'unité logique 9c de la batterie de dialoguer avec l'unité centrale 10 du cycle par l'intermédiaire des connecteurs 9a, 9b.

La batterie 9 alimente un moteur électrique 11 (M), par exemple un moteur d'assistance électrique au pédalage qui peut être commandé par l'unité centrale 10.

Le moteur électrique 11 est relié à une des roues du cycle, par exemple la roue avant, et il peut éventuellement être du type pouvant fonctionner soit en mode moteur pour entraîner cette roue, soit en mode générateur pour se faire entraîner par ladite roue et générer un courant électrique alimentant la batterie 9.

En temps normal, le fonctionnement du moteur 11 en mode moteur ou générateur est commandé par l'unité centrale 10, en fonction d'informations qu'elle reçoit de capteurs, notamment :
- un capteur de pédalage P adapté pour détecter ou mesurer la force de pédalage d'un utilisateur sur les pédales du cycle,
- éventuellement, un capteur de freinage adapté pour détecter un actionnement des freins du cycle par l'utilisateur,
- éventuellement un tachymètre (non représenté) mesurant la vitesse du cycle.

De plus, dans l'exemple considéré ici, l'unité centrale 10 peut également être reliée à un dispositif de commande d'antivol A, par exemple un simple bouton ou un dispositif à clef dont l'actionnement, pendant un arrêt temporaire du cycle, fait commander le moteur 11 par l'unité centrale 10 pour faire fonctionner le moteur 11 en mode générateur en l'absence de la batterie 9, ce qui rend quasiment impossible l'utilisation du cycle et donc est une dissuasion contre le vol du cycle.

L'unité centrale 10 peut également commander également au moins une interface de communication 12 (COM) qui est adaptée pour communiquer avec une interface de communication similaire 13 (COM) appartenant à chaque borne de verrouillage 7. Les interfaces de communication 12, 13 peuvent être de tout type connu et fonctionner par exemple en mode filaire, par induction, par ondes radio ou autres.

L'interface de communication 13 de la borne de verrouillage 7, quant à elle, communique avec une unité centrale électronique 14 (CPU) propre à la borne de verrouillage 7 (microprocesseur, microcontrôleur ou autre), laquelle unité centrale 14 commande par ailleurs un verrou électrique 15 (LOCK - un exemple d'un tel verrou est donné par exemple dans le document EP-A-1 820 722) adapté pour verrouiller un cycle sur la borne de verrouillage 7, et communique avec au moins un capteur 16 (SENS) adapté pour détecter le verrouillage d'un cycle sur la borne de verrouillage 7, et une interface de communication 17 (COM), par exemple un MODEM adapté pour communiquer par voie filaire 6 (figure 1) ou par une liaison radio courte portée ou tout autre manière, avec une interface de communication 18 similaire (COM) appartenant à la borne interactive 2 susmentionnée.

La borne interactive 2 comporte, quant à elle, également une unité centrale électronique 19 (CPU) telle qu'un microprocesseur, microcontrôleur ou autre, qui communique avec les périphériques 3-5 susmentionnés ainsi qu'avec une interface de communication 20 (COM) telle qu'un MODEM communiquant par radio ou par voie filaire avec le serveur central 8 susmentionné.

Dans ce système, chaque utilisateur possède de préférence sa propre batterie amovible 9, qu'il conserve avec lui notamment pour la recharger lorsqu'il ne s'en sert pas sur un cycle 1. Avantageusement, cette recharge peut s'effectuer au moyen d'un chargeur électrique 26 dédié tel que par exemple celui représenté sur les figures 3 et 4, comportant un connecteur 27 complémentaire du connecteur externe 9b de la batterie.

Le chargeur 26 peut par exemple comporter une unité centrale électronique 31 (CTRL) adaptée pour communiquer, par l'intermédiaire des connecteurs 9b, 27, avec l'unité logique 9c d'une batterie 9 connectée audit chargeur.

L'unité centrale électronique 31 du chargeur peut également commander le circuit d'alimentation électrique 28 du chargeur, qui peut se raccorder au réseau électrique par l'intermédiaire d'un câble externe 29 et d'une prise électrique 30.

L'unité logique 9c de la batterie peut être adaptée pour commander le dispositif de commutation 22 de la batterie en fonction d'informations de commande de batterie échangées entre ladite unité centrale 31 du chargeur et ladite unité logique 9c de la batterie.

Par exemple, l'unité logique 9c de la batterie 9 et l'unité centrale 31 du chargeur 26 peuvent comporter des codes identiques ou complémentaires permettant de valider que la batterie correspond au chargeur. Par exemple, l'identifiant de la batterie 9 peut être lu par l'unité centrale électronique 31 du chargeur, laquelle a en mémoire des données d'identification correspondant à cet identifiant, et l'unité centrale 31 du chargeur est adaptée pour envoyer à l'unité logique 9c de la batterie des informations de commande de batterie permettant de faire basculer le dispositif de commutation 22 à l'état de connexion, lorsque l'identifiant lu par l'unité centrale 21 du chargeur correspond auxdites informations d'identification.

Si cette correspondance est validée, l'unité logique 9c de la batterie fait passer le dispositif de commutation à l'état de connexion, et le chargeur 26 alimente la batterie 9 par le connecteur externe de ladite batterie. Inversement, si cette correspondance n'est pas validée, l'unité logique 9c de la batterie fait passer ou maintient le dispositif de commutation 22 à l'état de déconnexion, de sorte que le dispositif de commutation empêche la recharge de la batterie. On peut empêcher ainsi la recharge de batteries volées, si le voleur n'a pas pu voler un chargeur compatible avec cette batterie.

Le dispositif qui vient d'être décrit fonctionne comme suit.

Lorsqu'un utilisateur souhaite emprunter un cycle 1 sur la station de stockage de cycles, il peut s'identifier par exemple sur la borne interactive 2 (au moyen d'une carte lue par le lecteur de cartes 5 de la borne interactive ou en tapant un code personnel sur le clavier 3 ou par tout autre moyen connu, après quoi la borne interactive vérifie par exemple avec le serveur 8 de gestion de location, que l'utilisateur a le droit de louer un cycle.

En variante, chaque poste de verrouillage 7 peut comporter un lecteur de carte, par exemple un lecteur de carte sans contact, sur lequel les utilisateurs abonnés peuvent faire lire une carte sans contact pour s'identifier, après quoi le poste de verrouillage en question communique avec la borne interactive 2 qui demande l'autorisation du serveur comme indiqué ci-dessus.

Selon une autre variante particulièrement avantageuse, un utilisateur abonné peut s'identifier au moyen de sa batterie amovible 9, qui lui est personnelle comme indiqué ci-dessus et dont l'identifiant est mémorisé par le serveur avec les autres données de l'abonné, dans une base de données des abonnés. Dans ce cas, il suffit à l'utilisateur, lorsqu'il arrive à la station de stockage de cycles, de connecter sa batterie personnelle 9 sur le connecteur 9a du cycle souhaité. L'unité logique 9c de la batterie communique alors son identifiant à l'unité centrale 10 du cycle, qui elle-même communique avec l'unité centrale 19 de la borne interactive 2 par l'intermédiaire de l'unité centrale 14 de la borne de verrouillage 7 sur laquelle est verrouillé le cycle. Comme expliqué précédemment, la borne interactive 2 demande alors au serveur 8 l'autorisation de libérer le cycle 1.

Dans tous les cas évoqués ci-dessus, lorsqu'il reçoit une requête de libération d'un cycle, le serveur 8 vérifie si l'utilisateur est en droit de louer un cycle et si la batterie 9 n'est pas dans une liste de batteries volées. Si la situation est normale, le serveur donne à la borne interactive 2 l'autorisation de libérer le cycle 1 et note l'heure de début de location. La borne interactive 2 commande alors la libération d'un cycle 1 de sa borne de verrouillage 7, de façon que l'utilisateur puisse le prendre et l'utiliser.

A l'inverse, si le serveur détecte que l'identifiant de la batterie 9 correspond à une batterie volée lorsqu'il reçoit une requête de libération de cycle subséquente à la connexion de la batterie 9 sur le cycle, il envoie à la borne interactive 2 un ordre de blocage de batterie, ordre qui est relayé par ladite borne interactive puis par l'unité centrale du cycle vers l'unité logique 9c de la batterie 9. L'unité centrale 9c de la batterie fait alors basculer le dispositif de commutation en état de déconnexion et le maintient définitivement ans cet état, sauf à recevoir un ordre de déblocage venant du serveur ou d'un service de maintenance des batteries. On peut ainsi neutraliser les batteries volées, ce qui est une dissuasion supplémentaire contre le vol. On notera que ce processus de blocage e batterie peut être utilisé même si l'identifiant de la batterie n'est pas utilisé pour libérer le cycle : par exemple, dans ce cas, il peut être demandé à l'utilisateur de connecter sa batterie 9 sur le cycle 1 avant de libérer le cycle, faute de quoi le cycle n'est pas libéré.

Lorsque l'utilisateur connecte sa batterie 9 sur le connecteur 9a du cycle, son dispositif de commutation est initialement à l'état de déconnexion, et l'unité logique 9c de la batterie détecte la connexion de la batterie soit directement, soit indirectement par le fait que l'unité logique 9c commence à dialoguer avec l'unité centrale 10 du cycle. Lorsque l'unité logique 9c détecte cette connexion et sous réserve qu'elle n'ait pas reçu un ordre de blocage tel qu'expliqué ci-dessus, l'unité logique 9c commande le dispositif de commutation 22 de façon à le faire basculer en état de connexion. Plus généralement, cette commande de basculement en mode de connexion du dispositif de commutation 22 peut être effectuée en fonction de toute information de commande reçue par l'unité logique 9c (détection directe de connexion de la batterie, dialogue avec l'unité centrale du cycle, ou autre).

Eventuellement, ce passage en mode de connexion peut être subordonné à la réception d'un ordre reçu de l'unité centrale 10 du cycle. Par exemple, l'unité centrale du cycle peut d'abord lire l'identifiant de la batterie, vérifier que c'est un identifiant valide puis donner l'ordre de basculement en mode de connexion.

Si le cycle 1 a été libéré par la borne de verrouillage 7, l'utilisateur peut librement l'utiliser. Lorsqu'il a terminé de l'utiliser il rend le cycle sur une station de stockage de cycle (celle où il a emprunté le cycle ou une autre) en engageant le cycle 1 sur une borne de verrouillage libre 7 de cette station. La borne interactive 2 de cette station informe alors le serveur 8 que le cycle 1 a été rendu, puis si serveur confirme que la situation est en ordre, fait verrouiller le cycle 1 sur la borne de verrouillage 7. L'utilisateur reprend alors sa batterie 9.

Lorsque l'utilisateur déconnecte sa batterie 9 du connecteur 9a du cycle (en fin d'utilisation ou même lors d'un arrêt temporaire du cycle), l'unité logique 9c de la batterie détecte cette déconnexion comme expliqué ci-dessus et commande alors le dispositif de commutation 22 de façon à le faire basculer en état de déconnexion. La batterie ne peut alors pas se décharger intempestivement, même si son connecteur externe 9 vient en contact avec un milieu conducteur. Cet avantage vaut également si le connecteur externe est protégé en tout ou partie par un volet ou bouchon ou autre lorsqu'il est déconnecté.

## Revendications

1. Système automatique de stockage de cycles comprenant :
- une pluralité de cycles électriques (1) comportant chacun un moteur électrique (11) et fonctionnant respectivement avec des batteries électriques (9) rechargeables,
- une infrastructure fixe comportant une pluralité de postes de verrouillage (7) sur lesquels peuvent se verrouiller lesdits cycles électriques (1) et au moins un dispositif de commande externe (2, 8) adapté pour sélectivement autoriser le verrouillage et le déverrouillage des cycles électriques sur lesdits postes de verrouillage,
**caractérisé en ce que** les batteries (9) sont amovibles et indépendantes des cycles électriques, chaque batterie comportant un connecteur électrique externe (9b),
**en ce que** chaque cycle électrique (1) comporte un connecteur électrique de cycle (9a) accessible à un utilisateur pour connecter le connecteur électrique externe (9b) d'une desdites batteries (9) sur le cycle électrique et alimenter le cycle,
**et en ce que** la batterie comporte un dispositif de commutation (22) pouvant sélectivement basculer entre un état de connexion et un état de déconnexion adaptés pour respectivement permettre et interdire au connecteur électrique externe (9b) de ladite batterie de décharger de l'énergie électrique, et une unité logique (9c) commandant le dispositif de commutation (22) de la batterie en fonction d'informations de commande de batterie reçues par ladite unité logique de la batterie.

2. Système selon la revendication 1, dans lequel la batterie comporte un accumulateur électrique (21) et le dispositif de commutation (22) de la batterie est adapté pour sélectivement relier ledit accumulateur (21) au connecteur électrique externe (9b) de ladite batterie.

3. Système selon la revendication 1 ou la revendication 2, dans lequel l'unité logique (9c) de la batterie est adaptée pour détecter si le connecteur électrique externe (9b) de la batterie est connecté au connecteur de cycle, et pour commander le dispositif de commutation (22) de la batterie de façon à le faire basculer en état de déconnexion lorsque le connecteur électrique externe (9b) de la batterie est déconnecté du connecteur de cycle.

4. Système selon la revendication 3, dans lequel l'unité logique (9c) de la batterie est adaptée pour commander le dispositif de commutation (22) de la batterie de façon le faire basculer en état de connexion lorsque le connecteur électrique externe de batterie est connecté au connecteur de cycle.

5. Système selon l'une quelconque des revendications précédentes, dans lequel l'unité logique (9c) de la batterie communique avec une unité centrale électronique (10) appartenant au cycle et les informations de commande de batterie comprennent des données de commande de batterie échangées entre l'unité logique (9c) de la batterie et l'unité centrale électronique (10) du cycle.

6. Système selon l'une quelconque des revendications précédentes, dans lequel l'unité logique (9c) de la batterie communique avec l'infrastructure fixe (2, 7, 8) et est adaptée pour placer le dispositif de commutation (22) en état de déconnexion lorsqu'elle reçoit des informations de blocage de batterie en provenance de ladite infrastructure fixe.

7. Système selon l'une quelconque des revendications précédentes, dans lequel l'unité logique (9c) de la batterie communique avec l'unité centrale électronique (10) du cycle, laquelle communique avec l'infrastructure fixe.

8. Système selon l'une quelconque des revendications précédentes, dans lequel la batterie (9) possède un identifiant et le système comporte des moyens pour transmettre cet identifiant à l'infrastructure fixe (2, 7, 8), ladite infrastructure fixe (2, 7, 8) est adaptée pour communiquer avec l'unité logique (9c) de la batterie pour lui sélectivement transmettre un ordre de blocage, et ladite unité logique (9c) de la batterie est adaptée pour maintenir durablement le dispositif de commutation (22) à l'état de déconnexion lorsqu'elle a reçu ledit ordre de blocage.

9. Système selon l'une quelconque des revendications précédentes, dans lequel la batterie (9) possède un identifiant et le système comporte des moyens pour transmettre cet identifiant à l'infrastructure fixe (2, 7, 8) lorsque la batterie est connectée à un cycle électrique (1) verrouillé sur un poste de verrouillage (7), et ladite infrastructure fixe (2, 7, 8) est adaptée pour sélectivement déverrouiller ou non le cycle électrique (1) en fonction dudit identifiant.

10. Système selon la revendication 8 ou la revendication 9, dans lequel l'identifiant de la batterie est lisible par une unité centrale électronique (10) appartenant au cycle électrique (1), laquelle communique avec l'unité logique (9c) de la batterie et avec l'infrastructure fixe.

11. Système selon l'une quelconque des revendications précédentes, comportant en outre des chargeurs électriques (26) adaptés pour charger les batteries (9), chaque chargeur comportant une unité centrale électronique (31) adaptée pour communiquer avec l'unité logique (9c) d'une batterie connectée audit chargeur, l'unité logique (9c) de la batterie étant adaptée pour commander le dispositif de commutation (22) en fonction d'informations de commande de batterie échangées entre ladite unité centrale (31) du chargeur et ladite unité logique (9c) de la batterie, et le dispositif de commutation (22) étant adapté pour empêcher aussi bien la recharge que la décharge de la batterie par le connecteur externe (9b) de ladite batterie lorsqu'il est à l'état déconnecté.

12. Système selon la revendication 11, dans lequel la batterie (9) possède un identifiant lisible par l'unité centrale électronique (31) du chargeur, lequel a en mémoire des données d'identification correspondant à cet identifiant, et l'unité centrale (31) du chargeur est adaptée pour envoyer à l'unité logique (9c) de la batterie des informations de commande de batterie permettant de faire basculer le dispositif de commutation (22) à l'état de connexion, lorsque l'identifiant lu par l'unité centrale (21) du chargeur correspond auxdites informations d'identification.

13. Batterie amovible pour un système selon l'une quelconque des revendications précédentes, comportant :
- un connecteur électrique externe (9b),
- un dispositif de commutation (21) pouvant sélectivement basculer entre un état de connexion et un état de déconnexion adaptés pour respectivement permettre ou interdire au connecteur électrique externe (9b) de ladite batterie de décharger de l'énergie électrique,
- et une unité logique (9c) commandant le dispositif de commutation (22) de la batterie en fonction d'informations de commande de batterie reçues par ladite unité logique de la batterie.
